# EUROPÄISCHE PATENTSCHRIFT

(11) **EP 1 235 655 B1**
(45) Veröffentlichungstag und Bekanntmachung des Hinweises auf die Patenterteilung: **04.01.2006**
(21) Anmeldenummer: 00971380.1
(22) Anmeldetag: 14.10.2000
(51) Int. Cl.: B21D 39/03

(54) **VERBINDUNG ZWISCHEN ZWEI- ODER MEHRFLÄCHIG AUFEINANDERLIEGENDEN DÜNNEN BAHNFÖRMIGEN LAGEN, INSBESONDERE ZWISCHEN ZWEI EINE KONTINUIERLICHE BEHANDLUNG ERFAHRENDEN BÄNDER**
INTERCONNECTION BETWEEN TWO-SURFACE OR MULTI-SURFACE THIN STRIP-SHAPED LAYERS THAT LIE ONE ON TOP OF THE OTHER, IN PARTICULAR, BETWEEN TWO STRIPS UNDERGOING A CONTINUOUS PROCESSING
ASSEMBLAGE DE COUCHES MINCES EN FORME DE BANDES A DEUX FACES OU MULTIFACES SUPERPOSEES, EN PARTICULIER DE DEUX BANDES SOUMISES A UN TRAITEMENT EN CONTINU

(30) Priorität: 08.12.1999 DE 19959090
(43) Veröffentlichungstag der Anmeldung: 04.09.2002
(73) Patentinhaber: Prymetall GmbH & Co. KG, 52224 Stolberg (DE)
(72) Erfinder: ZINSEN, Peter, 52224 Stolberg (DE)
(74) Vertreter: Hansmann, Dierk
(86) Internationale Anmeldenummer: PCT/EP2000/010130
(87) Internationale Veröffentlichungsnummer: WO 2001/041951

(56) Entgegenhaltungen:
- EP-A- 0 029 415
- GB-A- 291 684
- US-A- 4 611 381

## Beschreibung

Die Erfindung richtet sich auf von Schweißstellen miteinander verbundene metallische bahnförmige Lagen der im Oberbegriff des Anspruches 1 angegebenen Art sowie auf ein entsprechendes Verfahren zur Verschweißung.

Wickelfähige Bänder werden in Blechwalzwerken oder in Glühöfen kontinuierlich verarbeitet. Sie werden in Form eines Wickels, eines sogenannten Coils, im Eingangsbereich der Anlage angeordnet, durchlaufen die Anlage und werden, nach ihrer Behandlung, am Ende der Anlage wieder auf einen Coil aufgewickelt. Nach Aufbrauch des eingangsseitigen Coils kommt es darauf an, an dessen Ende den Anfangsabschnitt eines frischen Coils zu verbinden, der dann von dem bereits in der Anlage noch durchgeschlauften Bandende beim Weiterlauf durch die verschiedenen Bearbeitungsstellen in der Anlage mit durchgezogen wird. Am Ausgang der Anlage kann dann die Verbindung wieder gelöst werden. Dann kann das fertig behandelte Band in Coilform entfernt und das in der Anlage durchgezogene Band beim weiteren Betrieb wieder in einen Coil am Ende der Anlage aufgewickelt werden.

Aus der US-PS 4,391,037 ist es bereits bekannt, die beiden übereinander liegenden Endabschnitte der metallischen Bänder mittels eines Stanzwerkzeugs miteinander zu verbinden. Das Ober- und Untermesser des Stanzwerkzeugs schneidet kreuzförmige Schnitte in die beiden Bänder, worauf die zwischen zwei Kreuzschnitten liegenden Lappen zweilagig umbördelt werden. Wegen der Umbördelungen liegen dann an den Verbindungsstellen vier Lagen übereinander. Diese hohe Dikke an den Verbindungsstellen ergibt Probleme beim Durchführen der verbundenen Endabschnitte zwischen den Walzen der das Bandmaterial bearbeitenden Anlagen. Die verbundenen Stanzstellen haben ein Rechteckprofil, an dessen Rechteckspitzen sich bei Belastung eine unangenehme Kerbwirkung bemerkbar macht, welche die Festigkeit der Verbindung herabsetzt. Die Stanzwerkzeuge sind nach einiger Benutzung verschlissen und müssen ausgetauscht werden, was mühsam ist.

Das Herstellen der Verbindung ist außerdem zeitaufwendig, weil zwei Hubbewegungen des Werkzeugs an jeder verbindungsstelle erforderlich sind, nämlich das Schneiden der beiden Bänder in einer ersten Arbeitsphase und dann das Flachdrükken und Pressen beim umbördeln der Lochränder in einer zweiten Arbeitsphase. Ähnliche Probleme ergeben sich bei allen mit ähnlichen Heftmaschinen arbeitenden Verbindungen, beispielsweise entsprechend der SU 15 90 168 A1, wo kreuzförmige Ausschnitte in den sich überlappenden Endabschnitten der Bahnen ausgebildet werden.

Bei Verarbeitungsmaschinen für schmale Bandprodukte aus metallischem Material ist es bekannt, aufeinanderfolgende Bahnen stirnseitig miteinander stumpf zu schweißen. Damit läßt sich zwar im verbindungsbereich ein flaches Produkt erreichen, das problemlos durch die Verarbeitungsmaschine hindurchgeführt werden kann, doch verändert die Schweißverbindung die Materialeigenschaften des Produkts an der Verbindungsstelle. Die Verbindungsstelle darf nur mäßigen Belastungen ausgesetzt werden.

Aus der britischen Schrift GB 291 684 ist ein verbindungsverfahren von zwei Metallfolien bekannt, wobei auf mechanischem Wege Löcher in die zwei Folienlagen eingebracht werden, was zu einer Art Heftverbindung führt und anschließend wird durch Schweißen eine zusätzliche Verbindung erzeugt. Diese zusätzliche Verbindung verhindert, daß sich die Heftverbindung beim Biegen der Bänder lösen kann. Die Elektroden für den Schweißvorgang befinden sich auf einer Walze. Die Abrollbewegung beim Schweißvorgang führt zu ungleichmäßigen Schweißstellen, da durch die Elektrodenstifte nicht gleichzeitig gleiche Energie in unterschiedliche Löcher eingebracht werden kann. Des weiteren weist die Anordnung lange Stromwege auf, was zu einer Beeinträchtigung der Gesamtvorrichtung führen kann.

Aus der US 4,755,652 ist eine weitere Möglichkeit der Verbindung zweier Metallagen durch Schweißen bekannt. Hier werden zum Erzeugen ringförmiger Schweißstellen in einem separaten Arbeitsgang vor dem Schweißen Kavernen in den Metallagen vorgefertigt und anschließend durch Schweißen die Verbindung der beiden Metallagen durchgeführt. Nachteilig bei diesem Verbindungsverfahren ist der separate zusätzliche Arbeitsvorgang, in dem Sacklöcher oder Beulen erzeugt werden. In einem Arbeitsgang ist das Verbinden von zwei Metallblechen des Weiteren durch Laserschweißen gezeigt. Eine Laserschweiß-Vorrichtung ist jedoch für viele Anwendungsfälle zu teuer.

Der Erfindung liegt die Aufgabe zugrunde, eine preiswerte Verbindung der im Oberbegriff genannten Art zu entwickeln, die sich schnell herstellen läßt, eine kleine Bauhöhe aufweist und sich durch eine große Festigkeit auszeichnet. Dies wird erfindungsgemäß durch die im Kennzeichen des Anspruches 1 angeführten Maßnahmen erreicht, denen folgende besondere Bedeutung zukommt.

Die Erfindung hat erkannt, daß die erfindungsgemäßen Ringschweißstellen allseitig belastbar sind und sich bei Zug- und Druckbelastungen durch eine hohe Festigkeit der damit erzeugten Verbindung auszeichnen. In zueinander diametralen Lagen allseitig, also auch in Bandlängsrichtung, liegen zwei Schweißnähte bei einer solchen Ringschweißung vor, welche die Position der beiden Lagen der Bänder im Überlappungsbereich zuverlässig in flächiger Anlage aneinander halten. Der Durchlauf dieser verbindungsstelle in Bearbeitungsanlagen mit sogenannten S-Rollen vermeidet die Gefahr eines Aufklappens der freien Randbereiche, obwohl die Ringschweißstellen im Abstand zu den Stirnflächen der beiden Bänder liegen. Das Herstellen der erfindungsgemäßen Ringschweißstellen ist schnell und preiswert vollziehbar. Die Ringschweißstellen halten ohne weiteres hohen Zug- und Druckbelastungen Stand.

Die Ringschweißstellen können ein beliebiges Umrißprofil aufweisen, z.B. längsoval ausgebildet sein oder eine Dreiecksform aufweisen. Die Gefahr von Kerbwirkungen entsteht durch die Ringschweißstellen auch dann nicht, wenn das Umrißprofil Ecken aufweisen sollte. Längsbelastungen und Querbelastungen werden ohne weiteres von den Ringschweißstellen beschädigungsfrei von dem einen Band auf das andere übertragen. Bewährt hat es sich dabei, als Umrißprofil der Ringschweißstellen ein Kreisprofil zu wählen. Ferner ist es empfehlenswert im Ringinneren die Schweißstellen mit einem Loch auszubilden. Das Bandmaterial an der das Loch umgrenzenden Kante fließt dann ineinander und sorgt für eine besonders feste Verbindung zwischen den beiden Bändern.

Weitere Maßnahmen und Vorteile der Erfindung ergeben sich aus den Unteransprüchen, der nachfolgenden Beschreibung und der Zeichnung. In der Zeichnung ist die Erfindung in einem Ausführungsbeispiel dargestellt. Es zeigen:
- Fig. 1: schematisch, im Ausbruch, ein Randstück zwischen zwei Coils mit zwei Verbindungsstellen gemäß der Erfindung,
- Fig. 2: in Vergrößerung, ein Schnitt durch ein Teilstück im Verbindungsbereich längs der Schnittstelle II-II von Fig. 1 und
- Fig. 3: den Verbindungsbereich von Fig. 2 in einer vorausgehenden Verfahrensstufe.

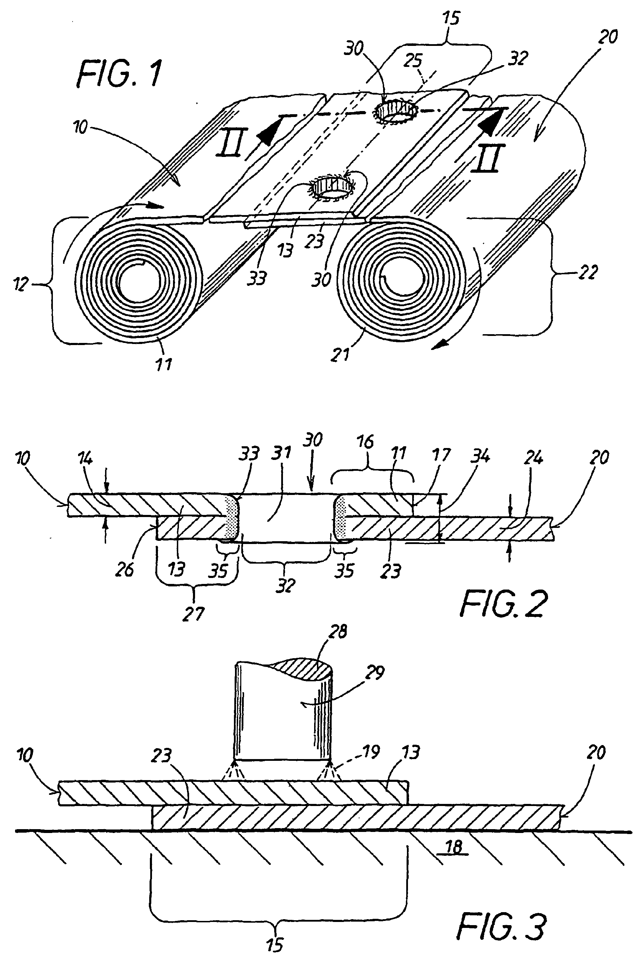

Zwei Bänder (10, 20) die aus zueinander unterschiedlichem metallischen Bandmaterial (11, 21) bestehen können, durchlaufen eine nicht näher gezeigte, das Bandmaterial (11, 21) behandelnde Anlage. Die Bänder (10, 20) liegen jeweils in Form von Coilen (12 , 22) am Anfang und am Ende der Anlage vor. Es kommt daher darauf an, ihre Endabschnitte (13, 23) in besonderer Weise miteinander zu verbinden. Dazu werden die beiden Endabschnitte flächig übereinandergelegt, so daß es zu einer Überlappungszone (15) kommt. Diese Verfahrensstufe ist in Fig. 3 gezeigt.

Gemäß Fig. 3 kommt es zu der Überlappung (15) der beiden Endabschnitte (13, 23) auf einem Tisch (18), über welchem eine oder eine Vielzahl von Elektroden (28) angeordnet ist. Die Elektroden (28) haben im vorliegenden Fall einen kreisförmigen Umriß (29). Zwischen den Elektroden (28) und dem Tisch (18) wird eine ausreichend hohe Spannung erzeugt, weshalb es gegenüber den beiden dazwischenliegenden Lagen zu einer Schweißfunken-Bildung (19) kommt. Dadurch entsteht das aus Fig. 2 erkennbare Produkt.

Durch die Schweißwirkung (19) wird an jeder Wirkungsstelle der Elektrode (28) eine ringförmige Schweißstelle (30) erzeugt, die nachfolgend kurz "Ringschweißstelle" genannt werden soll. Wegen des kreisförmigen Elektrodenumfangs (29) hat die Ringschweißstelle (30) eine Kreisform (33) . Andere Ringformen (33) sind denkbar, wofür man nur Elektroden (28) mit entsprechend anderem Umrißprofil (29) zu verwenden braucht. Im Ringinrieren (31) entsteht ein Loch (32); hier sind die beiden Lagen der Bänder (10, 20) herausgetrennt. Das erfolgt einfach durch ein Durchbrennen der beiden Lagen (13, 23). Dadurch ist das Bandmaterial (11, 21) in dem die Lochkante (33) umgrenzenden Bereich ineinandergeflossen. Es entsteht das durch Punktschraffur in Fig. 2 verdeutlichte Materialgemisch (35) von außerordentlich großer Festigkeit. Die Überlappungszone (15) kann relativ schmal sein. Beachtenswert ist die kleine Bauhöhe (34) der Verbindung, welche im wesentlichen nur die Summe der Stärke (14 und 24) der beiden verbundenen Bänder (10, 20) beträgt. Dies ist für den Durchlauf der verbundenen Bänder (10, 20) in der Bearbeitungsanlage sehr günstig.

Wegen der Ringschweißnaht (30) liegen in jeder Richtung stets doppelte Schweißstellen zwischen den beiden Bändern (10, 20) vor, die sich in der entsprechenden diametralen Blickrichtung auf die Ringform auf einer Linie befinden. Es gibt also immer eine doppelte Fixierung der beiden Bänder in zueinander diametraler Lage an jeder Ringschweißnaht (30). Die Ringschweißstellen sind in einer durch die Linie (25) in Fig. 1 verdeutlichten linearen Reihe zueinander angeordnet und erstrecken sich über die ganze Bandbreite. Die Reihe (25) der Ringschweißstellen (30) verläuft zweckmäßigerweise in Querrichtung des Bandes durch. Es können auch zwei zueinander auf Lücke angeordnete Reihen (25) solcher Ringschweißstellen (30) vorgesehen sein. Eine solche Verbindung aus Ringschweißstellen (30) läßt sich problemlos durch die in der Anlage befindlichen sogenannten S-Rollen hindurchziehen. Die gummierten Oberflächen solcher Rollen werden durch die erfindungsgemäße Verbindungsstelle nicht beschädigt. Insbesondere macht sich hier die geringe Bauhöhe (34) der Verbindung günstig bemerkbar.

Die Ringschweißstelle (30) ist, wie aus Fig. 2 entnommen werden kann, in einem Abstand (16) vom Stirnende (17) des ersten Bandes (10) angeordnet. Die gleichen Verhältnisse liegen auch beim zweiten Band (20) vor, weil auch dort das Stirnende (26) des Bandes (20) in ähnlichem Längsabstand (27) angeordnet ist. Dennoch ist, wie bereits erwähnt wurde, die Überlappungszone (15) relativ schmal.

## Patentansprüche

1. Bahnförmige Lagen (10, 20) aus metallischem Material (11, 21), die zwei- oder mehrflächig aufeinanderliegend dünn ausgebildet und miteinander von Schweißstellen (30) verbunden sind sowie einander in einem Überlappungsbereich (15) überlappende Endabschnitte (13, 23) aufweisen, insbesondere zwei wickelfähige Bänder (10, 20), die einer fortlaufenden Behandlung in kontinuierlich arbeitenden Anlagen, wie einem Blechwalzwerk oder einem Glühofen unterworfen werden, **dadurch gekennzeichnet, daß** im Überlappungsbereich (15) mehrere in sich ringförmige Schweißstellen (30) durch die beiden Lagen der Bänder (10, 20) hindurch verlaufen, daß die Ringschweißstellen (30) in einem Abstand (16, 27) zu Stirnenden (17, 26) der beiden Bänder (10, 20) liegen und daß im Ringinneren (31) der Ringschweißstellen (30) ein Loch (32) in das Bandmaterial (11, 21) der beiden Lagen (10, 20) gebrannt sowie das metallische Material (11, 21) beider Bänder (10, 20) an den das Loch (32) umgrenzenden Wänden der Ringschweißstellen ineinandergeflossen (35) ist.

2. Bahnförmige Lagen nach Anspruch 1, **dadurch gekennzeichnet, daß** die Ringschweißstellen (30) in wenigstens einer linearen Reihe (25) angeordnet sind.

3. Bahnförmige Lagen nach Anspruch 2, **dadurch gekennzeichnet, daß** die lineare Reihe (25) der Ringschweißstellen (30) in Bandquerrichtung verläuft.

4. Bahnförmige Lagen nach einem oder mehreren der Ansprüche 1 bis 3, **dadurch gekennzeichnet, daß** die Ringschweißstellen (30) eine Kreisform (33) aufweisen.

5. Verfahren zur Verbindung von zwei- oder mehrflächig aufeinanderliegenden dünnen bahnförmigen Lagen (10, 20) aus metallischem Material (11, 21) mit in einem Überlappungsbereich (15) einander überlappenden Endabschnitten (13, 23) durch Verschweißen, insbesondere zum verbinden zweier wickelfähiger Bänder (10, 20) bei einer fortlaufenden Behandlung der Bänder (10, 20) in kontinuierlich arbeitenden Anlagen, wie einem Blechwalzwerk oder einem Glühöfen, **dadurch gekennzeichnet, daß** im Überlappungsbereich (15) mehrere in sich ringförmige Schweißstellen (30) zur Verbindung der beiden Lagen der Bänder (10, 20) derart hergestellt werden, daß die Ringschweißstellen (30) in einem Abstand (16, 27) zu den Stirnenden (17, 26) der beiden Bänder (10, 20) positioniert werden und daß im Ringinneren (31) der Ringschweißstellen (30) ein Loch (32) in das Band-material (11, 21) der beiden Lagen (10, 20) gebrannt wird, sowie daß das metallische Material (11,21) beider Bänder (10, 20) an den das Loch (32) umgrenzenden Kanten der Ringschweißstellen (35) ineinanderfließt.

6. Verfahren nach Anspruch 5, **dadurch gekennzeichnet, daß** die Ringschweißstellen (30) in wenigstens einer linearen Reihe (25) positioniert werden.

7. verfahren nach Anspruch 6, **dadurch gekennzeichnet, daß** die lineare Reihe (25) der Ringschweißstellen (30) in Bandquerrichtung positioniert wird.

8. verfahren nach einem oder mehreren der Ansprüche 5 bis 7, **dadurch gekennzeichnet, daß** die Ringschweißstellen (30) mit einer Kreisform (33) versehen werden.

## Claims

1. Web-type layers (10, 20) of metallic material (11, 21) which are thin and placed with two or more surfaces in contact one on top of the other and joined to one another by welded junctions (30) and with end portions (13, 23) overlapping with one another in an overlap region (15), in particular two strips (10, 20) which can be made into coils and are subjected to a continuous treatment in continuously operating production units such as a sheet rolling mill or an annealing furnace, **characterised in that** several intrinsically annular welded junctions (30) extend through the two layers of the strips (10, 20) in the overlap region (15), which annular welded junctions (30) lie at a distance (16, 27) from terminal ends (17, 26) of the two strips (10, 20), and a hole (32) is burned into the strip material (11, 21) of the two layers (10, 20) in the annulus interior (31) of the annular welded junctions (30) and the metallic material (11, 21) of the two strips (10, 20) fuses (35) at the walls of the annular welded junctions surrounding the hole (32).

2. Web-type layers as claimed in claim 1, **characterised in that** the annular welded junctions (30) are disposed in at least one linear row (25).

3. Web-type layers as claimed in claim 2, **characterised in that** the linear row (25) of annular welded junctions (30) extends in the strip transverse direction.

4. Web-type layers as claimed in one or more of claims 1 to 3, **characterised in that** the annular welded junctions (30) have a circular shape (33).

5. Method of joining thin strip-shaped layers (10, 20) of metallic material (11, 21) with two or more surfaces placed one on top of the other with end portions (13, 23) overlapping with one another in an overlap region (15) by welding, in particular as a means of joining two strips (10, 20) which can be made into coils during a continuous treatment of the strips (10, 20) in continuously operating production units, such as a sheet rolling mill or an annealing furnace, **characterised in that** several intrinsically annular welded junctions (30) are produced in the overlap region (15) in order to join the two layers of strips (10, 20), which annular welded junctions (30) are positioned at a distance (16, 27) from the terminal ends (17, 26) of the two strips (10, 20), and a hole (32) is burned into the strip material (11, 21) of the two layers (10, 20) in the annular interior (31) of the annular welded junctions (30), and the metallic material (11, 21) of the two strips (10, 20) fuses at the edges of the annular welded junctions (35) surrounding the hole (32).

6. Method as claimed in claim 5, **characterised in that** the annular welded junctions (30) are positioned in at least one linear row (25).

7. Method as claimed in claim 6, **characterised in that** the linear row (25) of annular welded junctions (30) is positioned in the strip transverse direction.

8. Method as claimed in one of more of claims 5 to 7, **characterised in that** a circular shape (33) is imparted to the annular welded junctions (30).

## Revendications

1. Couches (10, 20) en forme de bande en matière métallique (11, 21), minces, à deux ou plusieurs faces superposées, assemblées l'une à l'autre en des points de soudure (30), et présentent des sections d'extrémité (13, 23) se chevauchant l'une l'autre dans une zone de chevauchement (15), en particulier deux bandes (10, 20) aptes à être bobinées, qui subissent un traitement continu dans une installation travaillant en continu, comme un laminoir à feuillard ou un four de recuit, **caractérisé en ce que** plusieurs points de soudure annulaires (30) s'étendent à travers les deux couches des bandes (10, 20) dans la zone de chevauchement (15), **en ce que** les points de soudure annulaires (30) se trouvent à distance (16, 27) des extrémités frontales (17, 26) des deux bandes (10, 20) et **en ce qu'**un trou (32) est formé par voie thermique à l'intérieur (31) des points de soudure annulaires (30) dans la matière (11, 21) des bandes des deux couches (10, 20), et la matière métallique (11, 21) des deux bandes (10, 20) est fusionnée (35) à l'endroit des parois des points de soudure délimitant le trou (32).

2. Couches en forme de bande selon la revendication 1, **caractérisées en ce que** les points de soudure annulaires (30) sont disposés au moins selon une rangée linéaire (25).

3. Couches en forme de bande selon la revendication 2, **caractérisées en ce que** la rangée linéaire (25) des points de soudure annulaires (30) s'étend dans le sens transversal des bandes.

4. Couches en forme de bande selon une ou plusieurs des revendications 1 à 3, **caractérisées en ce que** les points de soudure annulaires (30) présentent une forme circulaire (33).

5. Procédé pour assembler par soudage des couches (10, 20), en forme de bandes, minces, à deux ou plusieurs faces superposées, en matière métallique (11, 21), avec deux sections d'extrémité (13, 23) se chevauchant dans une zone de chevauchement (15), en particulier pour assembler deux bandes (10, 20) aptes à être bobinées au cours d'un traitement continu des bandes (10, 20) dans une installation travaillant en continu, comme un laminoir à feuillard ou un four de recuit, **caractérisé en ce que** plusieurs points de soudure (30) annulaires pour assembler les deux couches des bandes (10, 20) sont formés de telle façon dans la zone de chevauchement (15), que les points de soudure annulaires (30) se trouvent à distance (16, 27) des extrémités frontales (17, 26) des deux bandes (10, 20) et qu'un trou (32) est formé par voie thermique à l'intérieur (31) des points de soudure (30), dans la matière (11, 21) des bandes des deux couches (10, 20), et la matière métallique (11, 21) des deux bandes (10, 20) est fusionnée à l'endroit des parois (35) des points de soudure délimitant le trou (32).

6. Procédé selon la revendication 5, **caractérisé en ce que** les points de soudure annulaires (30) sont disposés au moins suivant une rangée linéaire (25).

7. Procédé selon la revendication 6, **caractérisé en ce que** la rangée linéaire (25) des points de soudure annulaires (30) est disposée perpendiculairement aux bandes.

8. Procédé selon l'une ou plusieurs de revendications 5 à 7, **caractérisé en ce que** les points de soudure annulaires (30) reçoivent une forme circulaire (33).
